# FASCICULE DE BREVET EUROPEEN

(11) **EP 0 639 514 B1**
(45) Date de publication et mention de la délivrance du brevet: **15.01.1997**
(21) Numéro de dépôt: 94203002.4
(22) Date de dépôt: 03.08.1990
(51) Int. Cl.: B65D 83/00

(54) **Procédé pour conserver, d'une manière stérile, un produit liquide ou semi-liquide dans un récipient ou flacon aseptique et récipient ou flacon mettant en oeuvre ce procédé**
Verfahren zum sterilen Verpacken eines flüssigen oder halb-flüssigen Produktes in einem aseptischen Behälter oder Flakon und für dieses Verfahren verwendeter Behälter oder Flakon
Method for the sterile conservation of a liquid or semi-liquid product in an aseptic container or bottle and container or bottle used in that method

(30) Priorité: 11.01.1990 FR 9000292
(43) Date de publication de la demande: 22.02.1995
(62) Demande divisionnaire de: 90402239.9
(73) Titulaire: Laffy, Raoul, F-92200 Neuilly sur Seine (FR); Laffy, Pierre Alain, F-92220 Bagneux (FR)
(72) Inventeur: Laffy, Raoul, F-92200 Neuilly sur Seine (FR); Laffy, Pierre Alain, F-92220 Bagneux (FR)
(74) Mandataire: Bruder, Michel

(56) Documents cités:
- DE-A- 3 104 726
- DE-A- 3 113 491
- LU-A- 31 996
- US-A- 2 557 952
- US-A- 3 255 935

## Description

La présente invention concerne un procédé pour conserver, d'une manière stérile, un produit liquide ou semi-liquide dans un récipient ou flacon aseptique ainsi qu'un récipient ou flacon mettant en oeuvre ce procédé.

Dans de nombreux domaines on utilise des récipients, tels que bouteilles, flacons, pots, boîtes, canettes etc... contenant des produits liquides, semi-liquides, pulvérulents, granuleux qui peuvent être utilisés dans le domaine de la santé comme médicaments, sérums physiologiques, agents de désinfection ou de prévention contre l'infection etc..., dans le domaine cosmétologique tel que crèmes de beauté etc..., dans le domaine alimentaire comme boissons diverses, vins, jus de fruits, sirops, sauces diverses, confitures..., dans d'autres domaines comme vernis, peintures... Ces récipients comportent généralement un orifice de sortie qui est obturé par un obturateur mobile, (couvercle, bouchon, capsule etc...). Lors de l'utilisation d'un tel produit contenu dans le récipient, une fois l'obturateur enlevé, le produit s'écoule de lui-même à travers l'orifice de sortie, et de l'air pénètre alors à l'intérieur du récipient pour remplir l'espace laissé libre par la quantité de liquide utilisée. Il en résulte que l'oxygène et les germes, bactéries, microbes etc..., présents normalement dans l'air, se trouvent introduits dans le récipient et que ces germes provoquent, au bout d'un certain temps, une altération (pollution, fermentation, oxydation) du produit contenu dans le récipient, ou bien simplement l'air dessèche le produit ou enlève son arôme si bien que ce produit devient plus ou moins rapidement impropre à l'usage. Pour éviter cette pollution on utilise des conservateurs parfois nocifs, comme dans le cas des produits ophtalmologiques, ou des conservateurs et des antioxydants comme dans le cas par exemple des produits cosmétologiques.

On connaît déjà, par le document DE-A-3 113 491, un récipient suivant le préambule de la revendication 2 destiné à contenir et à distribuer un produit pâteux, récipient comportant un corps contenant un piston interne mobile frottant d'une manière étanche contre la surface interne de la paroi latérale du récipient et délimitant un volume contenant le produit pâteux à distribuer, ce volume communiquant avec un tube de sortie aboutissant à un orifice de sortie. Un dispositif obturateur, comportant un volet obturateur mobile, est prévu pour fermer l'orifice de sortie. Le volet obturateur mobile est solidaire d'un bras d'un levier articulé à deux bras dont l'autre bras est solidaire d'un bouton de manoeuvre qui agit également sur le piston, pour commander simultanément, lors de chaque pression exercée sur le bouton de manoeuvre, l'ouverture de l'orifice de sortie et le déplacement du piston assurant la sortie de la quantité de produit désirée.

La présente invention vise à procurer un procédé pour conserver d'une manière stérile, un produit liquide ou semi-liquide dans un récipient de structure particulièrement simple, empêchant, lors de l'utilisation, toute entrée d'air à l'intérieur et même éventuellement tout contact du produit avec l'air et garantissant une non altération du produit qu'il contient, sur une longue durée et sans l'emploi de conservateur ou d'antioxydant comme c'est le cas général.

A cet effet, ce procédé pour conserver d'une manière stérile, un produit liquide ou semi-liquide dans un récipient ou flacon aseptique comportant un corps à paroi latérale cylindrique ou prismatique, obturé, à une extrémité, par un fond comprenant un piston mobile interne frottant d'une manière étanche contre la surface interne de la paroi latérale du récipient et délimitant un volume contenant le produit, ce volume communiquant avec un tube de sortie aboutissant à un orifice de sortie, un dispositif obturateur comportant un volet obturateur mobile pour fermer l'orifice de sortie, un bouton de manoeuvre pour exercer sur le piston, lors de chaque utilisation, une force suffisante pour repousser le piston et par conséquent pour exercer sur le produit une pression assurant la sortie de la quantité de produit désirée, le volet obturateur mobile étant solidaire d'un premier bras d'un levier à deux bras, articulé autour d'un axe horizontal porté par un capot supérieur du récipient, le bouton de manoeuvre étant solidaire du second bras du levier, opposé au premier bras, et le levier à deux bras et le bouton de manoeuvre étant rappelés en position normale de fermeture par un ressort, des moyens anti-retour agissant entre le piston et la paroi latérale du corps et maintenant le piston bloqué, après cessation de la force exercée en vue de la sortie du produit, dans la position atteinte, est caractérisé en ce que grâce au piston mobile qui est solidaire d'une tige s'étendant vers le haut, cette tige de piston présentant, sur sa surface latérale externe, une succession de crans dirigés vers le haut ou un filetage, et grâce au bouton de manoeuvre qui est monté mobile sur le capot supérieur du récipient, et qui comporte au moins un élément élastique qui, lorsque le bouton est enfoncé, prend appui sur des crans de la tige afin de provoquer un déplacement de cette tige du piston en direction du fond inférieur du récipient, on crée en permanence, dans le produit liquide, une pression résiduelle suffisante pour empêcher les germes et bactéries présents dans l'air environnant de pénétrer à l'intérieur du produit et de le contaminer et, au moyen du volet obturateur mobile, on coupe le jet de sortie avant la dernière goutte en évitant ainsi tout contact du liquide avec l'air de manière à assurer une garantie de stérilité de versement supplémentaire.

L'invention a également pour objet un récipient ou flacon aseptique conservateur d'un produit liquide ou semiliquide comportant un corps à paroi latérale cylindrique ou prismatique, obturé, à une extrémité, par un fond, comprenant un piston mobile interne frottant d'une manière étanche contre la surface interne de la paroi latérale du récipient et délimitant un volume contenant le produit, ce volume communiquant avec un tube de sortie aboutissant à un orifice de sortie, un dispositif obturateur comportant un volet obturateur mobile pour fermer l'orifice de sortie, un bouton de manoeuvre pour exercer sur le piston, lors de chaque utilisation, une force suffisante pour repousser le piston et par conséquent pour exercer sur le produit une pression assurant la sortie de la quantité de produit désirée, le volet obturateur mobile étant solidaire d'un premier bras d'un levier à deux bras, articulé autour d'un axe horizontal porté par un capot supérieur du récipient, le bouton de manoeuvre étant solidaire du second bras du levier, opposé au premier bras, et le levier à deux bras et le bouton de manoeuvre étant rappelés en position normale de fermeture par un ressort, des moyens antiretour agissant entre le piston et la paroi latérale du corps et maintenant le piston bloqué, après cessation de la force exercée en vue de la sortie du produit, dans la position atteinte, caractérisé en ce que le piston mobile est solidaire d'une tige s'étendant vers le haut, cette tige de piston présentant, sur sa surface latérale externe, une succession de crans dirigés vers le haut ou un filetage, et le bouton de manoeuvre qui est monté mobile sur le capot supérieur du récipient, comporte au moins un élément élastique qui, lorsque le bouton est enfoncé, prend appui sur des crans de la tige afin de provoquer un déplacement de cette tige du piston en direction du fond inférieur du récipient, de manière, d'une part, à créer en permanence, dans le produit liquide, une pression résiduelle suffisante pour empêcher les germes et bactéries présents dans l'air environnant de pénétrer à l'intérieur du produit et de le contaminer, et, d'autre part, au moyen du volet obturateur glissant en travers de l'orifice de sortie, à couper le jet de sortie du liquide avant la dernière goutte, évitant ainsi tout contact du liquide avec l'air et assurant donc une garantie de stérilité de versement supplémentaire.

Lorsqu'on supprime la force exercée sur le piston, le produit cesse automatiquement de s'écouler à l'extérieur du fait de l'étanchéité du piston, retenu en place, et que l'interface piston-produit n'est pas mise à la pression atmosphérique, condition indispensable pour que le produit puisse sortir du récipient sans force exercée sur le piston. Pour faire sortir le produit dans ces conditions il faudrait créer un vide à l'endroit de l'interface piston-produit, ce qui nécessiterait une force de traction importante.

Des expérimentations réalisées par l'Institut Pasteur, développées plus loin, prouvent que les bactéries et germes ne pénètrent pas dans le produit retenu a l'intérieur du récipient et que ce produit conserve sa stérilité pendant une durée illimitée. En outre l'obturateur qui est conçu de telle façon que, lors de chaque utilisation, il coupe le produit sortant par l'orifice avant la dernière goutte de sorte que le produit restant dans le récipient n'a jamais été en contact avec de l'air même au cours de l'utilisation, permet de renforcer la stérilité de versement.

Le récipient aseptique suivant l'invention offre ainsi l'avantage que le produit contenu ne peut être pollué, altéré, sujet à oxydation ou fermentation, desséché ou perdre son arôme, ce qui autorise une très longue conservation du produit.

On décrira ci-après diverses formes de récipients non revendiqués et une forme d'exécution de la présente invention, en référence au dessin annexé sur lequel :
La figure 1 est une vue en coupe axiale et verticale d'un récipient aseptique ne faisant pas partie de la présente invention, dans lequel sont prévus uniquement des moyens pour créer la pression résiduelle.
Les figures 2 et 3 sont des vues en coupe axiale et verticale de diverses formes d'exécution d'un récipient aseptique ne faisant pas partie de la présente invention pourvues d'un volet obturateur.
La fig. 4 est une vue en coupe axiale et verticale d'une forme d'exécution du récipient suivant la présente invention.

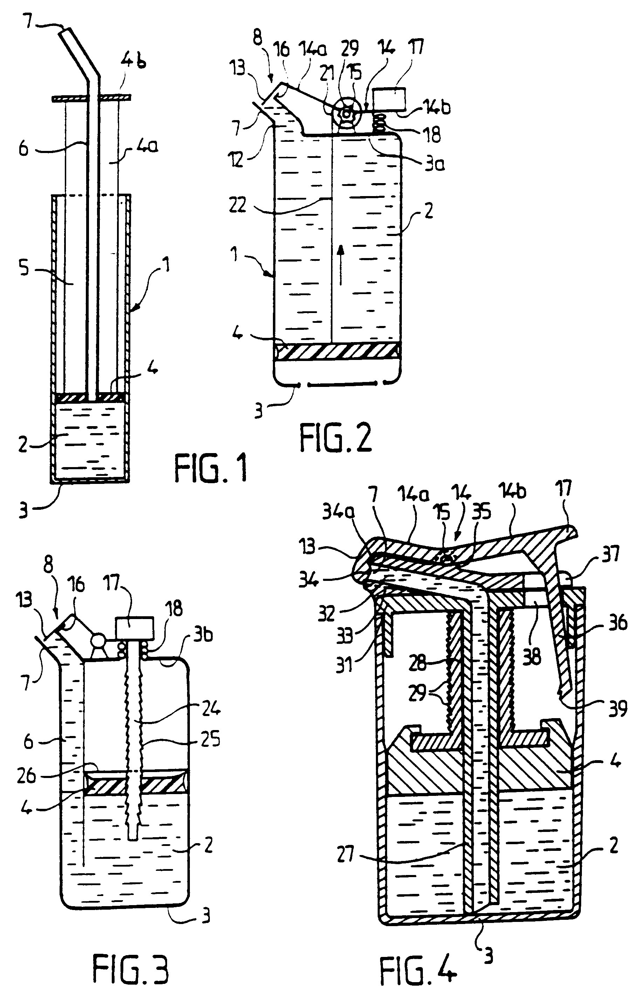

Sur la figure 1 est représenté un récipient aseptique 1 contenant un liquide 2 devant être protégé à l'encontre de toute contamination par les germes, bactéries etc... présents dans l'air ambiant. Le récipient 1 comprend un corps à paroi latérale de forme cylindrique ou prismatique, et qui est fermé par un fond 3 à sa partie inférieure. Le récipient 1 contient un piston mobile interne 4 en matière élastique, frottant d'une manière étanche sur la surface interne de la paroi latérale du récipient et séparant le volume interne du récipient en deux parties à savoir une partie supérieure 5 mise à l'air libre et un volume inférieur dans lequel est stocké le liquide 2. Dans cette forme d'exécution le piston étanche 4 est solidaire d'une tige de piston 4a à section transversale en forme d'étoile à trois branches et s'étendant vers le haut et à l'extérieur du récipient 1, en passant à travers l'orifice supérieur de ce récipient qui est ouvert. La tige de piston 4a est solidaire, à son extrémité supérieure qui fait saillie à l'extérieur du corps du récipient 1, d'une tête élargie 4b servant de poussoir pour actionner le piston 4. Suivant une variante de réalisation la tête formant poussoir 4b pourrait se trouver, en position initiale c'est-à-dire le récipient étant totalement rempli du produit, légèrement à l'intérieur du corps du récipient. De ce fait la tête formant poussoir 4b ne pourrait être que repoussée progressivement à l'intérieur du récipient et non pas tirée vers l'extérieur. Un tube 6 prévu pour la sortie du liquide, s'étend axialement le long de la tige de piston 4a, il traverse, à son extrémité interne, le piston étanche 4 et débouche dans le volume inférieur contenant le liquide 2, et il constitue, à son extrémité supérieure, un orifice de sortie 7 qui, dans cette forme d'exécution, est laissé libre. Par ailleurs le récipient est pourvu de moyens anti-retour qui sont soit liés au piston étanche 4 soit prévus sur une partie quelconque de la paroi du récipient 1. Ces moyens anti-retour permettent de maintenir en permanence une pression résiduelle.

Le tube de sortie vertical 6, qui peut tout aussi bien être excentré ou latéral extérieurement, sur le corps du récipient, peut être utilisé également dans n'importe laquelle des différentes formes d'exécution du récipient aseptique suivant l'invention et notamment celles qui sont décrites en détail par la suite.

Des essais ont été effectués par l'Institut Pasteur avec un récipient tel que représenté sur la figure 1 rempli avec un liquide 2 constitué par un milieu de culture thioglycolate (MCT) qui permet la croissance aussi bien des bactéries aérobies qu'anaérobies. On a contaminé artificiellement des eaux physiologiques (sensiblement identiques à des liquides organiques, larves, salives, exsudats) dans des béchers évasés avec des germes ci-après issus de culture sur gélose et dont on a dénombré les germes:
- Groupe a :
   1) Escherichia coli, 10³/ml
   2) Pseudomonas aeruginosa, 10³/ml
   3) Salmonella typhimurium, 10³/ml

   Ces trois germes sont mobiles et peuvent se propager par contact.
- Groupe b :
   1) Staphylococcus aureus, 10⁶/ml
   2) Streptococcus fecalis, 10⁶/ml responsable de suppurations.
- Groupe c :
   ainsi que deux champignons :
   1) Candida albicans
   2) Aspergillus niger

### ESSAI I

Chacun des germes des trois groupes a été utilisé individuellement.

Les gouttes de milieu de culture MCT du flacon ont été déposées 6 fois consécutivement à 1 heure d'intervalle, comme dans des conditions normales d'utilisation mais particulièrement sévères, au contact de la surface de l'eau physiologique contaminée. Le milieu de culture du flacon, les gouttes et l'eau physiologique contaminée sont donc en contact direct permettant ainsi de vérifier la conservation de la stérilité de versement lors de l'utilisation.

Le milieu intérieur est ensuite expulsé en totalité dans un tube stérile et placé 48 heures à l'étuve à 37°C.

### ESSAI II

Les germes du groupe a 1+ 2+3, puis du groupe b 1+2, puis du groupe c 1+2, ont été mélangés et l'expérience a été refaite dans les même conditions mais aussi bien pour les mélanges a, b ou c, le liquide intérieur n'a pas été expulsé mais conservé 21 jours à l'étuve à 37°C.

### RESULTAT :

### ESSAI I

- Germes du groupe a :
   1) = négatifs après 48 heures ; 2) idem ; 3) idem.
- Germes du groupe b :
   1) négatifs après 48 heures ; 2) idem.
- Germes du groupe c :
   1) négatifs après 5 jours ; 2) idem après 5 jours.

### ESSAI II

Mélange du groupe a égal après 15 jours, aucun trouble dans le flacon distributeur. Le contenu est alors étalé sur des boîtes de gélose PTV.

Il n'y a eu aucune colonie après un séjour de 48 heures de ces plaques à l'étuve à 37°C.

Les résultats ont été identiques pour les mélanges b et c.

Les conclusions des essais ci-dessus, dans des conditions expérimentales voisines d'une utilisation normale, ont été que l'on obtient une bonne conservation stérile à l'intérieur du flacon conservateur de liquide d'un milieu de culture très sensible. Cette stérilité du contenu du flacon est totale et illimitée dans le temps et la stérilité de versement, lors de l'utilisation, est complètement garantie.

Dans la forme d'exécution d'un récipient qui est représentée sur la figure 2, un dispositif obturateur 8 est disposé dans l'orifice de sortie 7 du récipient. Ce dispositif obturateur 8 est conçu, notamment pour des produits ophtalmologiques, de telle façon qu'il coupe le jet de liquide sortant du récipient avant la dernière goutte. De cette façon la totalité du liquide 2 restant dans le récipient n'est jamais en contact avec l'air, même à l'endroit de l'orifice de sortie 7, assurant ainsi une garantie supplémentaire de stérilité de versement. L'orifice de sortie 7 du liquide dans lequel est prévu le dispositif obturateur 8, est prévu à l'extrémité d'un tube 12 partant de la paroi frontale supérieure 3a du récipient 1. L'orifice de sortie 7 est obturé par un volet 13 du dispositif obturateur 8 qui est solidaire d'un bras 14a, d'un levier 14 à deux bras, articulé autour d'un axe horizontal 15 porté par la paroi frontale supérieure 3a du récipient. Le volet de fermeture 13 et le bras 14a sont agencés de manière que, lorsque le bras 14a pivote autour de l'axe 15, le volet 13 effectue un mouvement perpendiculaire à l'axe du tube 12 et de l'orifice de sortie 7. Cet orifice de sortie 7 est prolongé vers le haut par une lèvre 16 solidaire du tube 12 et le long de laquelle glisse le volet obturateur 13. De cette façon, la face interne du volet obturateur 13, qui est en contact avec le liquide se trouvant dans le tube 12 en position de fermeture, glisse en contact avec la lèvre 16 vers sa position d'ouverture et, de ce fait, elle n'est jamais en contact avec l'air, ce qui assure le maintien du liquide 2 à l'état stérile. Le dispositif obturateur 8 est actionné par un bouton de manoeuvre 17 qui est solidaire de l'autre bras 14b du levier 14 qui est opposé au bras 14a. Le bras 14b et le bouton de manoeuvre 17 sont rappelés vers le haut, en position normale de fermeture, par un ressort 18. Le récipient de la figure 2 comprend également un dispositif 29, du type à cliquet et roue à rochet, pour provoquer, lors de chaque pression exercée sur le bouton de manoeuvre 17, une rotation partielle d'une roue 21 sur laquelle est enroulé un fil ou une lanière 22. Ce fil 22 passe à travers un trou étanche prévu dans la paroi frontale supérieure 3a du récipient, il s'étend sensiblement axialement à l'intérieur du récipient 1 et il est accroché, à son extrémité inférieure, au piston 4 se trouvant au départ, c'est-à-dire lorsque le récipient 1 est plein du liquide 2, à proximité du fond inférieur 3 comportant au moins un orifice de mise à l'atmosphère. Par conséquent, lorsque l'utilisateur appuie sur le bouton de manoeuvre 17, il fait pivoter le levier 14 dans le sens des aiguilles d'une montre autour de l'axe horizontal 15. Pendant la course du bouton 17, le volet obturateur 13 se déplace vers le haut le long de la lèvre 16 de manière à ouvrir l'orifice de sortie 7. Des moyens d'étanchéité sont prévus pour empêcher, qu'au cours de ce mouvement, la face interne du volet obturateur 13 vienne en contact avec l'air ambiant. Ces moyens pourront être du type décrit ci-après dans la réalisation illustrée par la figure 4. Par ailleurs le bouton 17 commande le dispositif 29, à cliquet et roue à rochet, pour faire tourner la roue 21 et exercer une traction sur le fil 22 qui tire alors le piston 4 d'une faible distance vers le haut, ce qui assure la sortie de la quantité de liquide désirée tout en maintenant une pression permanente résiduelle dans le produit, empêchant toute contamination. Lorsque l'utilisateur relâche le bouton de manoeuvre 17, le volet obturateur 13 est rappelé en position de fermeture, par le ressort 18, en coupant le jet de liquide avant la dernière goutte, et le dispositif 19, du type à cliquet et roue à rochet, autorise ce mouvement. Avec un récipient de ce type on obtient donc un déplacement du piston 4 vers le haut.

Suivant une variante d'exécution, le volet obturateur 13 comprend une bille qui vient obturer l'orifice de sortie 7 du récipient, lorsque le dispositif obturateur 8 est fermé.

Dans la variante d'exécution représentée sur la figure 3, le piston 4 se trouve au départ dans la partie supérieure du récipient et il est actionné par une tige 24 s'étendant vers le haut à travers un capot supérieur 3b du récipient 1. Cette tige 24, pourvue de crans 25 dirigés vers le bas, est solidaire, à son extrémité supérieure, du bouton de manoeuvre 17 et elle traverse le capot supérieur 3b et le piston 4. Par conséquent lorsque l'utilisateur appuie sur le bouton 17, la tige 24 entraîne, par ses crans 25, le piston 4 vers le fond inférieur 3 pour refouler le liquide à travers l'orifice de sortie 7 tout en créant une pression résiduelle permanente dans le produit empêchant toute contamination. Lorsque la pression sur le bouton de manoeuvre 17 est relâchée, ce bouton, ainsi que la tige 24, remontent sous l'action du ressort de rappel 18. Le piston reste toutefois immobilisé dans sa position précédente, sous l'action de moyen anti-retour constitués, dans ce cas particulier, par une lèvre périphérique de retenue 26 qui est prévue sur la face supérieure du piston 4 et qui est en contact avec la face interne du récipient 1. Cette lèvre de retenue 26 s'oppose à tout déplacement du piston 4 vers le haut.

La figure 4 représente une exécution du récipient suivant l'invention du type dans laquelle le piston 4 est traversé par un tube plongeur vertical 27. Ce tube 27 peut s'étendre suivant l'axe du piston, comme il est représenté sur la figure 5, ou bien encore il peut être décalé latéralement par rapport à cet axe. La partie supérieure de ce tube plongeur 27 sert d'organe de guidage pour une tige 28 solidaire du piston, laquelle présente, sur sa surface latérale externe, des crans ou un filetage 29. La tige 28 est percée axialement et traversée par le tube 27 qui est issu d'un capot supérieur 31. Le tube plongeur 27 est prolongé vers le haut par un conduit 32 vers le haut du récipient. Ce conduit 32 est formé dans un embout 33 porté par le capot 31. L'orifice de sortie 7 qui est constitué par l'extrémité du conduit incliné 32, est obturé par un volet 13 qui présente, en regard de l'orifice 7, un bossage 34 s'engageant dans cet orifice pour le fermer. Le volet obturateur 13 forme une seule pièce avec le bras 14a d'un levier à deux bras 14 qui est articulé autour d'un axe horizontal 15. Cet axe est porté par une saillie 35 solidaire de l'embout 33. L'autre bras 14b du levier 14 forme, à son extrémité, le bouton de manoeuvre 17 et il est prolongé vers le bas par une patte 36,37. Cette patte 36 présente, à son extrémité inférieure, une ou plusieurs dents 39 destinées à agir sur les crans 29 de la tige 28. Par conséquent, lorsque l'utilisateur appuie sur le bouton de manoeuvre 17, il fait basculer le levier 14 dans le sens des aiguilles d'une montre, autour de l'axe 15. Au début de la course de basculement du levier 14, le volet obturateur 13 glisse sur la paroi de manière que le bossage 34 ne soit pas en contact avec l'air et libère l'orifice 7 du conduit 32, si bien que cet orifice est alors ouvert pour permettre la sortie du liquide 2. Au cours de la poursuite du basculement du levier 14, les dents 39 de la patte 36 viennent en contact avec des crans 29 de la tige 28 si bien que la patte 36 se trouve alors accouplée avec cette tige 28. La poursuite de son mouvement vers le bas entraîne par conséquent un léger mouvement de descente de la tige 28 et du piston 4, pour assurer la sortie du liquide et maintenir une pression résiduelle permanente dans le liquide, empêchant toute contamination. Lorsque l'utilisateur cesse d'exercer une pression sur le bouton de manoeuvre 17, le levier 14 revient de lui-même dans la position représentée sur la figure 5, sous l'action de moyens élastiques non représentés, le volet obturateur 13 refermant alors l'orifice de sortie 7 en coupant le jet de liquide avant la dernière goutte et sans que le bossage 34 ait été au contact de l'air, garantissant ainsi une stérilité de versement supplémentaire.

Naturellement le mouvement de coulissement axial du piston 4 à l'intérieur du récipient 1 peut être obtenu par tout dispositif de transmission de mouvement bien connu dans la technique, comportant notamment une roue dentée pouvant être entraînée en rotation à partir de l'extérieur du récipient et accouplée à une tige de piston mobile axialement.

## Revendications

1. Procédé pour conserver, d'une manière stérile, un produit liquide ou semi-liquide dans un récipient ou flacon aseptique (1) comportant un corps à paroi latérale cylindrique ou prismatique, obturé, à une extrémité, par un fond (3), comprenant un piston mobile interne (4) frottant d'une manière étanche contre la surface interne de la paroi latérale du récipient (1) et délimitant un volume contenant le produit (2), ce volume communiquant avec un tube de sortie (6) aboutissant à un orifice de sortie (7), un dispositif obturateur (8) comportant un volet obturateur mobile (13) pour fermer l'orifice de sortie (7), un bouton de manoeuvre (17) pour exercer sur le piston (4), lors de chaque utilisation, une force suffisante pour repousser le piston (4) et par conséquent pour exercer sur le produit (2) une pression assurant la sortie de la quantité de produit désirée, le volet obturateur mobile (13) étant solidaire d'un premier bras (14a) d'un levier à deux bras (14), articulé autour d'un axe horizontal (15) porté par un capot supérieur (31) du récipient (1), le bouton de manoeuvre (17) étant solidaire du second bras (14b) du levier (14), opposé au premier bras (14a), et le levier à deux bras (14) et le bouton de manoeuvre (17) étant rappelés en position normale de fermeture par un ressort (18), des moyens anti-retour agissant entre le piston (4) et la paroi latérale du corps et maintenant le piston bloqué (11), après cessation de la force exercée en vue de la sortie du produit, dans la position atteinte, caractérisé en ce que grâce au piston mobile (4) qui est solidaire d'une tige (28) s'étendant vers le haut, cette tige de piston (28) présentant, sur sa surface latérale externe, une succession de crans (29) dirigés vers le haut ou un filetage, et grâce au bouton de manoeuvre (17) qui est monté mobile sur le capot supérieur (31) du récipient, et qui comporte au moins un élément élastique (36) qui, lorsque le bouton (17) est enfoncé, prend appui sur des crans (29) de la tige (28) afin de provoquer un déplacement de cette tige du piston (4) en direction du fond inférieur (3) du récipient, on crée en permanence, dans le produit liquide, une pression résiduelle suffisante pour empêcher les germes et bactéries présents dans l'air environnant de pénétrer à l'intérieur du produit et de le contaminer et, au moyen du volet obturateur mobile (13), on coupe le jet de sortie avant la dernière goutte en évitant ainsi tout contact du liquide avec l'air de manière à assurer une garantie de stérilité de versement supplémentaire.

2. Récipient ou flacon aseptique (1) conservateur d'un produit liquide ou semi-liquide comportant un corps à paroi latérale cylindrique ou prismatique, obturé, à une extrémité, par un fond (3), comprenant un piston mobile interne (4) frottant d'une manière étanche contre la surface interne de la paroi latérale du récipient (1) et délimitant un volume contenant le produit (2), ce volume communiquant avec un tube de sortie (6) aboutissant à un orifice de sortie (7), un dispositif obturateur (8) comportant un volet obturateur mobile (13) pour fermer l'orifice de sortie (7), un bouton de manoeuvre (17) pour exercer sur le piston (4), lors de chaque utilisation, une force suffisante pour repousser le piston (4) et par conséquent pour exercer sur le produit (2) une pression assurant la sortie de la quantité de produit désirée, le volet obturateur mobile (13) étant solidaire d'un premier bras (14a) d'un levier à deux bras (14), articulé autour d'un axe horizontal (15) porté par un capot supérieur (31) du récipient (1), le bouton de manoeuvre (17) étant solidaire du second bras (14b) du levier (14), opposé au premier bras (14a), et le levier à deux bras (14) et le bouton de manoeuvre (17) étant rappelés en position normale de fermeture par un ressort (18), des moyens anti-retour agissant entre le piston (4) et la paroi latérale du corps et maintenant le piston bloqué, après cessation de la force exercée en vue de la sortie du produit, dans la position atteinte, caractérisé en ce que le piston mobile (4) est solidaire d'une tige (28) s'étendant vers le haut, cette tige de piston (28) présentant, sur sa surface latérale externe, une succession de crans (29) dirigés vers le haut ou un filetage, et le bouton de manoeuvre (17) qui est monté mobile sur le capot supérieur (31) du récipient, comporte au moins un élément élastique (36) qui, lorsque le bouton (17) est enfoncé, prend appui sur des crans (29) de la tige (28) afin de provoquer un déplacement de cette tige du piston (4) en direction du fond inférieur (3) du récipient, de manière, d'une part, à créer en permanence, dans le produit liquide, une pression résiduelle suffisante pour empêcher les germes et bactéries présents dans l'air environnant de pénétrer à l'intérieur du produit et de le contaminer, et, d'autre part, au moyen du volet obturateur (13) glissant en travers de l'orifice de sortie (7), à couper le jet de sortie du liquide avant la dernière goutte, évitant ainsi tout contact du liquide avec l'air et assurant donc une garantie de stérilité de versement supplémentaire.

3. Récipient suivant la revendication 2 caractérisé en ce que le piston (4) est traversé par un tube plongeur vertical (27), la partie supérieure de ce tube plongeur (27) sert d'organe de guidage pour la tige (28) qui est percée axialement et traversée par le tube (27), ce tube (27) est solidaire du capot supérieur (31) et il est prolongé vers le haut par un conduit (32) formé dans un embout (33) porté par le capot supérieur (31), dont l'extrémité constitue l'orifice de sortie (7), lequel est obturé par le volet (13) qui présente, en regard de l'orifice (7), un léger bossage (34) s'engageant dans cet orifice pour le fermer, et la paroi interne du volet (13) frotte sur la paroi externe de l'embout (33), au moment de l'ouverture, de manière à être en permanence protégée de l'air, le volet obturateur (13) forme une seule pièce avec le bras (14a) du levier à deux bras (14) articulé autour de l'axe horizontal (15) qui est porté par l'embout (33), l'autre bras (14b) du levier (14) forme, à son extrémité, le bouton de manoeuvre (17) et il est prolongé vers le bas par une patte (36) qui traverse le capot (31), cette patte (36) présentant, à son extrémité inférieure, une ou plusieurs dents (39) destinées à agir sur les crans (29) de la tige (28).

## Claims

1. Process for conserving, in sterile manner, a liquid or semi-liquid product in an aseptic recipient or bottle (1) comprising a body with cylindrical or prismatic lateral wall, obturated at one end by a bottom (3), comprising an inner mobile piston (4) rubbing tightly against the inner surface of the lateral wall of the recipient (1) and defining a volume containing the product (2), this volume communicating with an outlet tube (6) terminating at an outlet orifice (7), an obturator device (8) comprising a mobile obturator flap (13) to close the outlet orifice (7), a manoeuvring knob (17) for exerting on the piston (4), upon each use, a sufficient force to push the piston (4) and consequently to exert on the product (2) a pressure ensuring that the desired quantity of product is delivered, the mobile obturator flap (13) being fast with a first arm (14a) of a two-arm lever (14), articulated about a horizontal pin (15) borne by an upper lid (31) of the recipient (1), the manoeuvring knob (17) being fast with the second arm (14b) of the lever (14), opposite the first arm (14a), and the two-arm lever (14) and the manoeuvring knob (17) being returned into normal position of closure by a spring (18), non-return means acting between the piston (4) and the lateral wall of the body and, after the force exerted to deliver the product has ceased, maintaining the blocked piston (11) in the position attained, characterized in that, thanks to the mobile piston (4) which is fast with an upwardly extending rod (28), this piston rod (28) presenting, on its outer lateral surface, a succession of upwardly directed notches or a thread, and thanks to the manoeuvring knob (17) which is mounted mobile on the upper lid (31) of the recipient, and which comprises at least one elastic element (36) which, when the knob (17) is driven in, abuts on notches (29) of the rod (28) in order to provoke a displacement of this rod of the piston (4) in the direction of the lower bottom (3) of the recipient, a residual pressure is permanently created in the liquid product, which is sufficient to prevent the germs and bacteria present in the surrounding air from penetrating inside the product and from contaminating it and, by means of the mobile obturator flap (13), the outlet jet is cut before the last drop, thus avoiding any contact of the liquid with the air so as to ensure a supplementary guarantee of sterile pouring.

2. Aseptic recipient or bottle (1) for conserving a liquid or semi-liquid product, comprising a body with cylindrical or prismatic lateral wall, obturated at one end by a bottom (3), comprising an inner mobile piston (4) rubbing tightly against the inner surface of the lateral wall of the recipient (1) and defining a volume containing the product (2), this volume communicating with an outlet tube (6) terminating at an outlet orifice (7), an obturator device (8) comprising a mobile obturator flap (13) to close the outlet orifice (7), a manoeuvring knob (17) for exerting on the piston (4), upon each use, a sufficient force to push the piston (4) and consequently to exert on the product (2) a pressure ensuring that the desired quantity of product is delivered, the mobile obturator flap (13) being fast with a first arm (14a) of a two-arm lever (14), articulated about a horizontal pin (15) borne by an upper lid (31) of the recipient (1), the manoeuvring knob (17) being fast with the second arm (14b) of the lever (14), opposite the first arm (14a), and the two-arm lever (14) and the manoeuvring knob (17) being returned into normal position of closure by a spring (18), non-return means acting between the piston (4) and the lateral wall of the body and, after the force exerted to deliver the product has ceased, maintaining the blocked piston in the position attained, characterized in that the mobile piston (4) is fast with an upwardly extending rod (28), this piston rod (28) presenting, on its outer lateral surface, a succession of upwardly directed notches (29) or a thread, and the manoeuvring knob (17) which is mounted mobile on the upper lid (31) of the recipient comprises at least one elastic element (36) which, when the knob (17) is driven in, abuts on notches (29) of the rod (28) in order to provoke a displacement of this rod of the piston (4) in the direction of the lower bottom (3) of the recipient, so as, on the one hand, permanently to create a residual pressure in the liquid product sufficient to prevent the germs and bacteria present in the surrounding air from penetrating inside the product and from contaminating it, and, on the other hand, by means of the obturator flap (13) sliding across the outlet orifice (7), to cut the outlet jet of the liquid before the last drop, thus avoiding any contact of the liquid with the air and therefore ensuring a supplementary guarantee of sterile pouring.

3. Recipient according to Claim 2, characterized in that the piston (4) is traversed by a vertical immersion tube (27), the upper part of this immersion tube (27) serves as member for guiding the rod (28) which is pierced axially and traversed by the tube (27), this tube (27) is fast with the upper lid (31) and it is upwardly extended by a conduit (32) formed in a connecting piece (33) borne by the upper lid (31), whose end constitutes the outlet orifice (7), which is obturated by the flap (13) which presents, opposite the orifice (7), a slight boss (34) engaging in this orifice to close it, and the inner wall of the flap (13) rubs on the outer wall of the connecting piece (33) at the moment of opening, so as to be permanently protected from the air, the obturator flap (13) forms one piece with the arm (14a) of the two-arm lever (14) articulated about the horizontal pin (15) which is borne by the connecting piece (33), the other arm (14b) of the lever (14) forms, at its end, the manoeuvring knob (17) and it is extended downwardly by a tab (36) which traverses the lid (31), this tab (36) presenting, at its lower end, one or more teeth (39) intended to act on the notches (29) of the rod (28).

## Patentansprüche

1. Verfahren zum sterilen Aufbewahren eines flüssigen oder halb-flüssigen Produktes in einem aseptischen Behälter oder Flakon (1) mit einem Gehäuse mit zylindrischer oder prismatischer Seitenwand, an einem Ende abgedichtet mit einem Boden (3), mit einem beweglichen Kolben innen (4), der fest gegen die Innenfläche der Seitenwand des Behälters (1) streicht und ein Volumen, welches das Produkt (2) enthält, abgrenzt, wobei dieses Volumen in Verbindung steht mit einem Ausgangsrohr (6), das zu einer Ausgangsöffnung (7) führt, mit einer Verschlußvorrichtung (8) mit beweglicher Verschlußkappe (13) zum Verschließen der Ausgangsöffnung (7), einem Bedienungsknopf (17), mit dem bei jeder Verwendung eine ausreichende Kraft auf den Kolben (4) zum Zurückstoßen des Kolbens (4) ausgeübt wird und somit auf das Produkt (2) ein Druck ausgeübt wird, der sicherstellt, daß die gewünschte Produktmenge entnommen werden kann, wobei die bewegliche Verschlußkappe (13) ein Stück mit dem ersten Arm (14a) eines zweiarmigen Hebels (14) bildet, der um eine horizontale Achse (15) angebracht ist und von einer oberen Abdeckung (31) des Behälters (1) getragen wird, wobei der Bedienungsknopf (17) ein Stück mit dem zweiten Arm (14b) des Hebels (14) bildet und sich gegenüber dem ersten Arm (14a) befindet, und wobei der zweiarmige Hebel (14) sowie der Bedienungsknopf (17) durch eine Feder (18) in die normale Verschlußposition zurückgebracht werden, mit einer Anti-Rückstoß-Vorrichtung, die zwischen dem Kolben (4) und der Seitenwand des Gehäuses wirkt und den Kolben in der erreichten Position blockiert hält (11), nachdem keine Kraft mehr ausgeübt wird, weil das Produkt hinausgeflossen ist, dadurch gekennzeichnet, daß man durch den beweglichen Kolben (4), der mit einer Stange (28) verbunden ist, die nach oben geht, wobei diese Kolbenstange (28) auf der seitlichen Außenfläche eine Reihe von Einkerbungen (29) hat, die nach oben ausgerichtet sind, oder ein Gewinde aufweist, und durch den Bedienungsknopf (17), der beweglich auf der oberen Abdeckung (31) des Behälters angebracht ist und mindestens ein elastisches Element (36) enthält, das, wenn der Knopf (17) gedrückt wird, auf die Einkerbungen (29) der Stange (28) drückt, um eine Bewegung dieser Stange des Kolbens (4) in Richtung des Bodens (3) des Behälters zu bewirken, ständig in dem flüssigen Produkt einen Restdruck erzeugt, der ausreicht, zu verhindern, daß die in der Umgebungsluft vorhandenen Keime und Bakterien in das Innere des Produkts gelangen und es verunreinigen, und daß man mittels einer beweglichen Verschlußkappe (13) den Ausgangsstrahl vor dem letzten Tropfen abschneidet und auf diese Weise jeglichen Kontakt der Flüssigkeit mit der Luft vermeidet, um die Sterilität zusätzlich ausfließender Flüssigkeit zu gewährleisten.

2. Aseptischer Behälter oder Flakon (1) zur Aufbewahrung eines flüssigen oder halbflüssigen Produktes, mit einem Gehäuse mit zylindrischer oder prismatischer Seitenwand, an einem Ende abgedichtet mit einem Boden (3), mit einem beweglichen Kolben innen (4), der fest gegen die Innenfläche der Seitenwand des Behälters (1) streicht und ein Volumen, welches das Produkt (2) enthält, abgrenzt, wobei dieses Volumen in Verbindung steht mit einem Ausgangsrohr (6), das zu einer Ausgangsöffnung (7) führt, mit einer Verschlußvorrichtung (8) mit beweglicher Verschlußkappe (13) zum Verschließen der Ausgangsöffnung (7), mit einem Bedienungsknopf (17), mit dem bei jeder Verwendung eine ausreichende Kraft auf den Kolben (4) zum Zurückstoßen des Kolbens (4) ausgeübt und somit auf das Produkt (2) ein Druck ausgeübt wird, der sicherstellt, daß die gewünschte Produktmenge entnommen werden kann, wobei die bewegliche Verschlußkappe (13) ein Stück mit dem ersten Arm (14a) eines zweiarmigen Hebels (14) bildet, der um eine horizontale Achse (15) angebracht ist und von einer oberen Abdeckung (31) des Behälters (1) getragen wird, wobei der Bedienungsknopf (17) ein Stück mit dem zweiten Arm (14b) des Hebels (14) bildet und sich gegenüber dem ersten Arm (14a) befindet, und wobei der zweiarmige Hebel (14) sowie der Bedienungsknopf (17) durch eine Feder (18) in die normale Verschlußposition zurückgebracht werden, mit einer Anti-Rückstoß-Vorrichtung, die zwischen dem Kolben (4) und der Seitenwand des Gehäuses wirkt und den Kolben in der erreichten Position blockiert hält (11), nachdem keine Kraft mehr ausgeübt wird, weil das Produkt hinausgeflossen ist, dadurch gekennzeichnet, daß der bewegliche Kolben (4) mit einer Stange (28) verbunden ist, die nach oben geht, und diese Kolbenstange (28) auf der seitlichen Außenfläche eine Reihe von Einkerbungen (29) hat, die nach oben ausgerichtet sind, oder ein Gewinde, und dadurch, daß der Bedienungsknopf (17), der beweglich auf der oberen Abdeckung (31) des Behälters angebracht ist, mindestens ein elastisches Element (36) enthält, das, wenn der Knopf (17) gedrückt wird, auf die Einkerbungen (29) der Stange (28) drückt, um eine Bewegung dieser Stange des Kolbens (4) in Richtung des Bodens (3) des Behälters zu bewirken, derart, daß man einerseits ständig in dem flüssigen Produkt einen Restdruck erzeugt, der ausreicht, zu verhindern, daß die in der Umgebungsluft vorhandenen Keime und Bakterien in das Innere des Produkts gelangen und es verunreinigen, und andererseits mittels einer beweglichen Verschlußkappe (13) den Ausgangsstrahl vor dem letzten Tropfen abschneidet und auf diese Weise jeglichen Kontakt der Flüssigkeit mit der Luft vermeidet, um die Sterilität zusätzlich ausfließender Flüssigkeit zu gewährleisten.

3. Behälter nach Anspruch 2, dadurch gekennzeichnet, daß der Kolben (4) von einem vertikalen Tauchrohr durchquert (27) wird, daß der obere Teil dieses Tauchrohrs als Führungsglied für die Stange (28) dient, die axial durchbohrt und von dem Rohr (27) durchquert wird, daß dieses Rohr (27) mit der oberen Abdeckung (31) verbunden und nach oben durch ein Leitungsrohr (32) in einen Ansatz (33) verlängert ist, das von der oberen Abdeckung (31) getragen wird, dessen Ende die Ausgangsöffnung (7) bildet, die mit der Kappe (13) verschlossen ist, die zum Ausgang hin (7) eine leichte Wölbung (34) bildet, mit der die Ausgangsöffnung verschlossen wird, daß die innere Wand der Kappe (13) bei Öffnung bei Öffnung gegen die äußere Wand des Ansatzes (33) streicht, damit ständig Schutz vor der Luft besteht, daß die Verschlußkappe (13) ein einziges Stück mit dem Arm (14a) des zweiarmigen Hebels (14) bildet, der um die horizontale Achse (15) angebracht ist, die von dem Ansatz (33) getragen wird, daß der andere Arm (14b) des Hebels (14) an seinem Ende den Bedienungsknopf (17) bildet und er nach unten durch ein Anhangstück (36) verlängert wird, das die Abdeckung (31) durchquert, wobei dieses Anhangstück (36) an seinem inneren Ende einen oder mehrere Zähne (39) aufweist, deren Funktion darin besteht, auf die Einkerbungen (29) der Stange (28) einzuwirken.
